# EUROPEAN PATENT APPLICATION

(11) **EP 1 074 375 A1**
(43) Date of publication of application: **07.02.2001**
(21) Application number: 00830532.8
(22) Date of filing: 26.07.2000
(51) Int. Cl.: B29C 47/06, B29C 47/28

(54) **Extrusion head for multi-layer plastic films**

(30) Priority: 03.08.1999 IT MI991744
(71) Applicant: Macchi s.r.l., 21040 Venegono Inferiore (VA) (IT)
(72) Inventor: Macchi, Luigi, 21040 Venegono Inferiore, VA (IT)
(74) Representative: Pizzoli, Antonio

(57) **Abstract**

An extrusion head for multi-layer plastic films includes an outer body (E) enclosing a plurality of concentric bells (C1, C2, C3) connected to said body (E) through a base disk (D) on whose upper face the bases of said members abut, their securing being achieved through locking screws (V) housed in a plurality of concentric crowns of holes formed in the disk (D) and aligned with corresponding holes formed in the base faces of the bells (C1, C2, C3) and of the outer body (E).

## Description

The present invention relates to plants for the production of multi-layer plastic films by circular lamination, and in particular to an improved extrusion head for use in such a plant.

It is known that an extrusion head conventionally includes an outer cylindrical body enclosing a plurality of concentric "bells" in a number equal to the number of layers making up the film you wish to produce.

During the assembling step of the head the bells are joined one to the other, from the central one outwards, through perimetrical base flanges. In other words, the central bell has a flange at the base on which the adjacent bell is placed and secured, said bell being in turn provided with a similar flange for securing the third bell external thereto and so on up to the outermost bell to which the outer body of the head is secured.

This type of head has various drawbacks both of structural and assembling type. First, in order to assure a perfect abutment of each bell on the flange of the bell internal thereto it is necessary to provide a small play along the inner edge of the flange. This means that in order to prevent leakages it is often necessary to use gaskets between the bells, with a greater manufacturing complexity and correlated costs.

Second, the bulkiness in height of the head is proportional to the number of bells it includes, due to the sum of the heights of the various connecting flanges. This may cause bulkiness problems if you wish to change the number of bells, i.e. the number of layers in the film.

Furthermore, the above-described type of assembly is rather inconvenient in that each bell must be secured prior to proceeding to position and secure the subsequent bell. This rigidity in the connecting sequence, moreover divided into various steps, may cause a significant waste of time in case it is necessary to remove an intermediate bell and/or check its position.

Therefore the object of the present invention is to provide an extrusion head which overcomes the above-mentioned drawbacks.

This object is achieved by means of an extrusion head wherein the (flangeless) bells are aligned so as to have a single abutment plane and are secured to a single base disk, which in turn is secured to the outer body. Other advantageous features are disclosed in the dependent claims.

A first great advantage of the extrusion head according to the present invention is the better tightness achieved thanks to the connection along a single plane and without a need for play between the bells. In this way also the requirement of interposing gaskets between the bells is overcome.

Another significant advantage of this extrusion head stems from the fact that its height is fixed, regardless of the number of bells, and it is lower since there is no overlapping of the thickness of the flanges as in prior art heads. Dispensing with the flanges also makes easier and cheaper the production of the bells.

Still another advantage of the present extrusion head is found during the assembling step, when the bells can be positioned all together and checked prior to securing them to the base disk, which can be carried out in a single step.

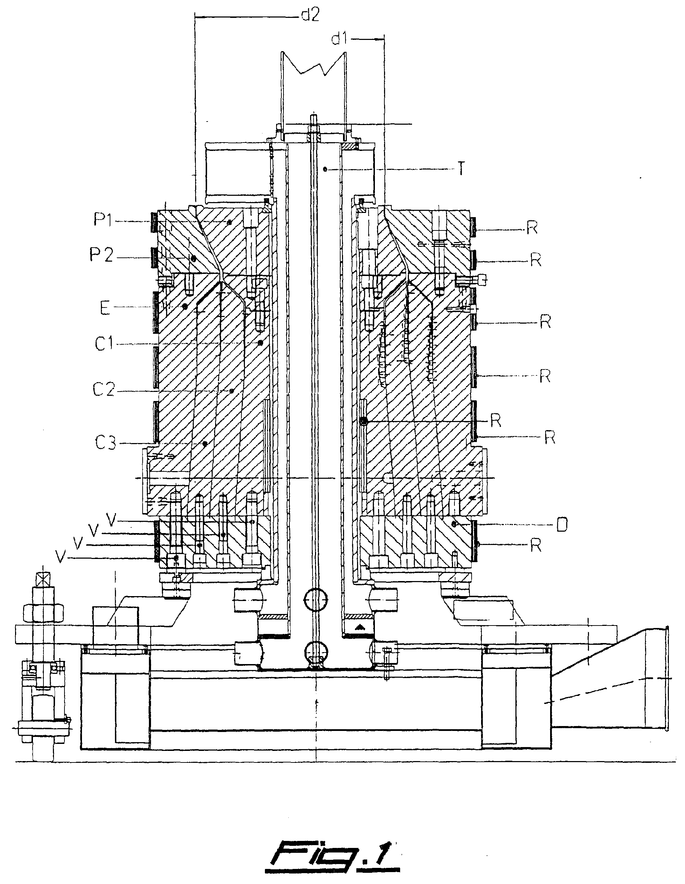

These and other advantages and characteristics of the extrusion head according to the present invention will be clear to those skilled in the art from the following detailed description of an embodiment thereof, with reference to the only drawing, annexed as figure 1, wherein the head is shown in a vertical sectional view.

As it may be seen in said figure, the present extrusion head includes an outer body E enclosing a plurality of concentric bells C1, C2, C3. The presence of three bells in the illustrated embodiment is just an example, in that their number usually ranges from two to seven or more.

Above these members there is arranged an extrusion ring divided into an inner portion P1 and an outer portion P2 having a different size and flaring according to the required extrusion diameter. In the left portion of fig. 1 there is shown the configuration for a maximum diameter d2 and in the right portion the configuration for a minimum diameter dl, and also the central cooling duct T is depicted with corresponding different sizes on the two sides. There are also a plurality of resistors R maintaining the various parts of the extrusion head at the correct temperature.

The novel aspect of the present invention is the addition of a base disk D on which the bases of all the concentric bells C1, C2, C3 as well as the base of the outer body E abut and are aligned. Disk D is provided with a plurality of concentric crowns of holes aligned with corresponding holes formed in the base faces of the bells and of the outer body, whereby it is possible to secure said members to disk D through relevant locking screws V.

It is clear that even if the number of bells is different the height of disk D remains unchanged while only its diameter changes, whereby the bulkiness in height of the head remains unchanged. Furthermore it is clearly easier and more precise to carry out the assembling along the single plane consisting of the upper face of disk D on which all the members to be assembled abut.

It should be noted that in order to facilitate the mutual centering of the bells, these have a conical shape in their lower portion and a cylindrical shape in their upper portion.

It is clear that the above-described and illustrated embodiment of the extrusion head according to the invention is just an example susceptible of various modifications. In particular, the shape and number of the bells may be freely changed as well as the profile of disk D which may be modified according to specific needs. For example, disk D could have a perimetrical step extending upwards or downwards at the area where it is secured to the outer body, as long as disk D provides the connection between said body and all the bells enclosed by the latter.

## Claims

1. An extrusion head for multi-layer plastic films including an outer body (E) enclosing a plurality of concentric bells (C1, C2, C3), characterized in that the connection between said body (E) and said bells (C1, C2, C3) is achieved through a base disk (D) on whose upper face the bases of all said members abut.

2. An extrusion head according to claim 1, characterized in that the securing of the outer body (E) and of the bells (C1, C2, C3) to the disk (D) is achieved through locking screws (V) housed in a plurality of concentric crowns of holes formed in the disk (D) and aligned with corresponding holes formed in the base faces of the bells (C1, C2, C3) and of the outer body (E).

3. An extrusion head according to claim 1 or 2, characterized in that the upper face of the disk (D) has a plane profile.

4. An extrusion head according to claim 1 or 2 or 3, characterized in that the bells (C1, C2, C3) have a conical shape in their lower portion and a cylindrical shape in their upper portion.
